(19) Europäisches Patentamt
European Patent Office
Office européen des brevets

(11) **EP 3 756 140 B1**

(12) **EUROPEAN PATENT SPECIFICATION**

(45) Date of publication and mention
of the grant of the patent:
**14.01.2026 Bulletin 2026/03**

(21) Application number: **19706608.7**

(22) Date of filing: **21.02.2019**

(51) International Patent Classification (IPC):
*G06N 3/094* (2023.01)        *G06N 3/09* (2023.01)
*G06N 3/0495* (2023.01)        *G06N 3/0475* (2023.01)
*G06N 3/045* (2023.01)

(52) Cooperative Patent Classification (CPC):
**G06N 3/045; G06N 3/0464; G06N 3/0475;
G06N 3/0495; G06N 3/09; G06N 3/094**

(86) International application number:
**PCT/EP2019/054286**

(87) International publication number:
**WO 2019/162364 (29.08.2019 Gazette 2019/35)**

(54) **ADVERSARIAL PROBABILISTIC REGULARIZATION**

GEGNERISCHE PROBABILISTICHE REGULARISIERUNG

RÉGULARISATION PROBABILISTE ANTAGONISTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2018 US 201862634332 P**

(43) Date of publication of application:
**30.12.2020 Bulletin 2020/53**

(73) Proprietor: **Robert Bosch GmbH
70442 Stuttgart (DE)**

(72) Inventors:
• **SUN, Xiaoxia
Sunnyvale, CA 94085 (US)**
• **SHAH, Mohak
Dublin, California 94568 (US)**
• **KURUP, Unmesh
Mountain View, California 94043 (US)**
• **SUN, Ju
Sunnyvale, CA 94085 (US)**

(56) References cited:
• **J. ZHAO ET AL: "Adversarially regularized
autoencoders", ARXIV:1706.04223V2, 15
November 2017 (2017-11-15), XP055542165,
Retrieved from the Internet <URL:https://arxiv.
org/abs/1706.04223v2> [retrieved on 20190521]**
• **R. FATHONY ET AL: "Discrete Wasserstein
generative adversarial networks (DWGAN)",
OPENREVIEW.NET: REV. 13 FEB. 2018, 13
February 2018 (2018-02-13), XP055590559,
Retrieved from the Internet <URL:https://
openreview.net/references/pdf?id=SJeL6ixwM>
[retrieved on 20190521]**
• **Y. BAI ET AL: "ProxQuant: quantized neural
networks via proximal operators",
ARXIV:1810.00861V2, 8 October 2018
(2018-10-08), XP080928782, Retrieved from the
Internet <URL:https://arxiv.org/abs/
1810.00861v2> [retrieved on 20190521]**

**Description**

TECHNICAL FIELD

This disclosure relates generally to neural networks, and, in particular, to training neural networks.

BACKGROUND

In 2017, Zhao et al. (Adversarially regularized autoencoders; arXiv:1706.04223v2; 15 Nov. 2017; DOI:10.48550/arXiv.1706.04223) disclosed an adversarially regularized autoencoder (ARAE) for learning more robust discrete-space representations, by jointly training both a rich discrete-space encoder and a simpler continuous space generator function, while using GAN training to constrain the distributions to be similar. In 2018, Fathony et al. (Discrete Wasserstein generative advarsarial networks (DWGAN); OpenReview.net; 13 Feb. 2018; retrieved from https://openre view.net/references/pdf?id=SJeL6ixwM) disclosed a discrete Wasserstein GAN (DW-GAN) model based on a dual formulation of the Wasserstein distance between two discrete distributions, together with a novel training algorithm and corresponding network architecture based on this formulation.

Many problems in machine learning involve solving an optimization problem in the conceptual form

$$\min_{\theta \in \mathbb{R}^d} f(\theta), \quad \text{s.t.} \quad \theta \sim i.i.d. \ \mathcal{L}_t . \qquad (1)$$

Here $\mathcal{L}_t$ is a target distribution. Two examples which involve this optimization problem include sparse regression and supervised neural networks. For sparse regression, $f(\theta)$ is the data fitting error (error function), and $\mathcal{L}_t$ is a distribution that favors a sparse or compressible $\theta$ (e.g., Bernoulli-Subgaussian or Laplacian). For supervised neural networks, $f(\theta)$ is the training (i.e., data-fitting) error, and $\mathcal{L}_t$ promotes certain structures on the network weights $\theta$. For example, $\mathcal{L}_t$ could be Gaussian that ensures the weight distribution is "democratic". A more interesting case in practice is when $\mathcal{L}_t$ is a discrete distribution, say binary on {+1, -1} or ternary on {+1, 0, -1} - these distributions lead to compact (i.e., quantized and sparse) networks that are efficient in inference, desirable for hardware implementation, and also robust to adversarial examples.

This disclosure is focused primarily on training compact supervised neural networks for solving problems of the above form (1). In order to turn form (1) into a concrete computational problem, a regularized version of form (1) is considered:

$$\min f(\theta) + \lambda \phi_{\mathcal{L}_t}(\theta). \qquad (2)$$

Here, the coordinates of $\theta$ are treated as i.i.d. (independent and identically distributed) samples of a target distribution $\mathcal{L}_t$, and small $\phi_{\mathcal{L}_t}(\theta)$ amounts to closeness of the empirical distribution of coordinates of $\theta$ to $\mathcal{L}_t$. For the purpose of this disclosure, $\phi_{\mathcal{L}_t}(\theta)$ is referred to as a probabilistic regularizer. The tunable parameter $\lambda > 0$ controls the relevant strength of the regularizer with respect to $f(\theta)$.

Given $\mathcal{L}_t$, it is natural to choose $\phi_{\mathcal{L}_t}(\theta)$ as certain monotone functions of the probability density function (PDF), similar to how priors are encoded in Bayesian inference. Two challenges stand out: (i) A general probability distribution may not have a density function, or even if it has, the density function may not be in any closed form. (ii) The density function may be discontinuous-discrete distributions that we are particularly interested in having discretely supported PDF's. To optimize (2) in large-scale settings using derivative-based methods or other scalable methods, considerable analytic and design efforts are needed to tackle the two challenges.

Another natural choice is to make $\phi_{\mathcal{L}_t}(\theta)$ the discrepancy between empirical moments of the coordinate distributions to those of the target $\mathcal{L}_t$, i.e., under the umbrella of moment matching method. This approach tends to cause significant computational burden due to moment calculation, and it is also not suitable for distributions with unbounded moments (e.g., heavy-tailed distributions).

SUMMARY

The invention provides a computer-implemented method of training a supervised neural network and a neural network training system as recited in the independent claims. Advantageous embodiments are set out in the dependent claims. One embodiment of the present disclosure relates to a computer-implemented method of training a supervised neural network as defined in independent claim 1.

Another embodiment of the present disclosure relates to a neural network training system as defined in independent claim 7.

BRIEF DESCRIPTION OF THE DRAWINGS

FIG. 1 is a schematic illustration of a neural network training system according to the present disclosure.
FIG. 2 depicts an algorithm for generating an adversarial probabilistic regularizer (APR).
FIG. 3 shows a table that compares APR and GMM-regularized networks.
FIG. 4 shows histograms of weights for each layer of LeNet-5.
FIG. 5 depicts the evolution of weight distribution at the end of epochs 1, 10, 50, 100 and 400 for training ResNet-44 on CIFAR-10.
FIG. 6 shows a table of the classification error of binary and ternary networks.
FIG. 7 shows the learning curve for training ResNet-20 with ternary weights.
FIG. 8 is a schematic illustration of a computing device for implementing the framework described herein.

DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to a person of ordinary skill in the art to which this disclosure pertains.

This disclosure is directed to systems and methods for training supervised neural networks including a regularizer $\phi_{\mathcal{L}_t}(\theta)$ that has minimal restriction on the target distribution $\mathcal{L}_t$. The approach is inspired by the recent empirical successes of Generative Adversarial Networks (GANs) in learning distributions of natural images or languages. The central idea of the approach described herein is that the distribution matching problem is rephrased as a distribution learning problem in the GAN framework, which results in a natural parameterized regularizer that is learned from data.

GANs were first proposed to generate naturally looking images and have subsequently been extended to various other applications, including semi-supervised learning, image super-resolution, and text generation.

GAN works by emulating a competitive game between a generator G and a discriminator D, both of which are functions: given a target distribution $\mathcal{L}_t$ and a noisy (i.e., uninformative) distribution $\mathcal{L}_n$, G learns to generate samples of the form G(z) from $z \sim \mathcal{L}_n$ to fool D, and meanwhile D learns to discern the true samples $x \sim \mathcal{L}_t$ versus the fake samples G(z). Ideally, at the equilibrium, G learns the true distribution $\mathcal{L}_t$ such that $G(z) \sim \mathcal{L}_t$. Mathematically, D learns to assign high values to true samples and low values to fake samples, and the game can be realized as a saddle point optimization problem:

$$\min_{G} \max_{D} \mathbb{E}_{x \sim \mathcal{L}_t}[\log D(x)] - \mathbb{E}_{z \sim \mathcal{L}_n}[\log(1 - D(G(z)))].$$

This formulation fails to learn degenerate distributions, e.g., discrete distributions or distributions supported on a low-dimensional manifolds, due to the choice of a strong distance metric for distributions. Wasserstein GAN (WGAN) was proposed to mitigate some of the issues, which uses the weaker metric earth mover distance or Wasserstein-1 (W-1) distance. For two distributions $\mathcal{L}_1$ and $\mathcal{L}_2$, this distance is computed as

$$W_{\mathcal{L}_1, \mathcal{L}_n} = \sup_{\|f\|_L \leq 1} \mathbb{E}_{x \sim \mathcal{L}_1}[f(x)] - \mathbb{E}_{x \sim \mathcal{L}_2}[f(x)] \qquad (3)$$

where $\|f\|_L$ denotes the Lipschitz constant of f. Thus, minimizing the W-1 distance between the generator distribution and the target distribution yields the minimax problem:

$$\min_{G} \max_{\|D\|_L \leq 1} \mathbb{E}_{x \sim \mathcal{L}_t}[D(x)] - \mathbb{E}_{x \sim \mathcal{L}_n}[D(G(x))]. \qquad (4)$$

This simple change to the metric has led to improved learning performance over several tasks.

In this disclosure, discrete distributions are of interest, and hence the W-1 distance is a reasonable metric to work with, as in WGAN. This motivates the following choice for probabilistic regularizer $\phi_{\mathcal{L}_t}(\theta)$:

$$\phi_{\mathcal{L}_t}(\theta) = \max_{\|\psi\|_L \le 1} \mathbb{E}_{\theta \sim \mathcal{L}_t}[\psi(\theta)] - \frac{1}{d}\sum_{i=1}^{d} \psi(\theta_i).$$

Since only finite-dimensional $\theta$ is considered, an empirical distribution for the second term has been directly substituted with the term $\frac{1}{d}\sum_{i=1}^{d} \psi(\theta_i)$ .

As is standard in the GAN literature, the function $\psi : \mathbb{R} \mapsto \mathbb{R}$ is realized as a deep network, with weight vector $\omega$. So $\psi(\cdot; \omega)$ is used to make the dependency explicit. Combining this with (2), the central optimization problem of this disclosure is obtained as:

$$\min_{\theta} \max_{\omega \|\psi(\cdot;\omega)\|_L \le 1} f(\theta) + \lambda \left[ \mathbb{E}_{\theta \sim \mathcal{L}_t}[\psi(\theta; \omega)] - \frac{1}{d}\sum_{i=1}^{d} \psi(\theta_i; \omega) \right] . \qquad (5)$$

One remarkable feature of this approach inherent from the GAN framework is that only samples from the target distribution $\mathcal{L}_t$ are needed, as dictated by the $\mathbb{E}_{\theta \sim \mathcal{L}_t}[\psi(\theta; \omega)]$ term. This compares favorably to approaches that rely on the existence of PDF's with reasonable regularity (e.g., closed-form and possibly also differentiability), when samples can be easily obtained. This is the case for learning discrete distributions.

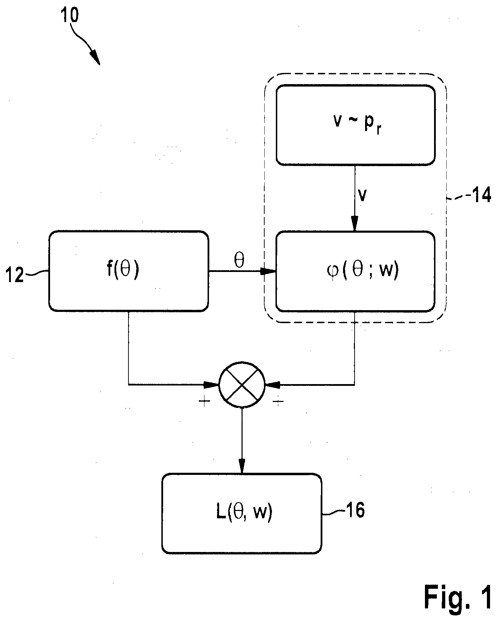

FIG. 1 depicts conceptual diagram of a neural network training system 10 that uses a discriminator network from a GAN to generate an adversarial probabilistic regularizer (APR) in accordance with the present disclosure. As depicted in FIG. 1, there is a primal learner (error function) $f(\theta)$ 12 and a discriminator network $\psi(\cdot; \omega)$ 14, parameterized by w. The primal learner 12 tries to find $\theta$ that makes $f(\theta)$ small and meanwhile carries an empirical distribution of coordinates faking the discriminator. The discriminator 14 tries to find w so that it can distinguish true samples from the target distribution $\mathcal{L}_t$ and "fake" samples from coordinates of $\theta$. The discriminator 14 outputs the APR $\phi_{\mathcal{L}_t}(\theta)$ which is added to the error function $f(\theta)$ at adding node 16. The output of the adding node 16 corresponds to min $f(\theta) + \lambda\phi_{\mathcal{L}_t}(\theta)$.

The framework described herein could be subject to the same generator-discriminator game interpretation as shown in GAN (FIG. 1), but there are two important differences from the classical GAN. First, there is no generator and the framework works directly with the empirical samples. There is only a finite number of empirical samples, which are coordinates of the finite-dimensional vector $\theta$. In contrast, the classical GANs are expected to learn an effective generator that (hopefully) always generates samples according to $\mathcal{L}_t$ from samples of $\mathcal{L}_n$. Second, there is an additional $f(\theta)$ term to be minimized also when generating empirical samples $\{\theta_i\}$ (i.e., all the coordinates of $\theta$) to match/fool the discriminator network.

To adapt this approach to learn compact neural networks, the model optimization problem (5) is modified into a supervised learning problem based on deep neural networks (DNN). Given data-label pairs $(x,y) \sim \mathcal{L}_D$, the following function is defined:

$$f(\theta) = \mathbb{E}_{(x,y)\sim \mathcal{L}_D}[\ell((x,y); \theta)],$$

where the loss function $\ell(\cdot; \theta)$ is defined on top of a certain DNN parametrized by $\theta$. Substituting this into the optimization problem (5) results in a saddle-point optimization problem that takes the following form:

$$\min_{\theta} \max_{\omega \|\psi(\cdot;\omega)\|_L \le 1} \mathbb{E}_{(x,y)\sim \mathcal{L}_D}[\ell((x,y); \theta)] + \lambda \left[ \mathbb{E}_{\theta \sim \mathcal{L}_t}[\psi(\theta; \omega)] - \frac{1}{d}\sum_{i=1}^{d} \psi(\theta_i; \omega) \right]. \qquad (6)$$

Due to the practical advantage of quantized and sparse weights on training and inference, the target distribution $\mathcal{L}_t$ can be set toward appropriately learning compact networks. We can set, e.g.,

$$p(\theta = 1) = p(\theta = -1) = 1/2,$$

to learn quantized, binary networks, or

$$p(\theta = 1) = p(\theta = -1) = \frac{\rho}{2}, p(\theta = 0) = 1 - \rho$$

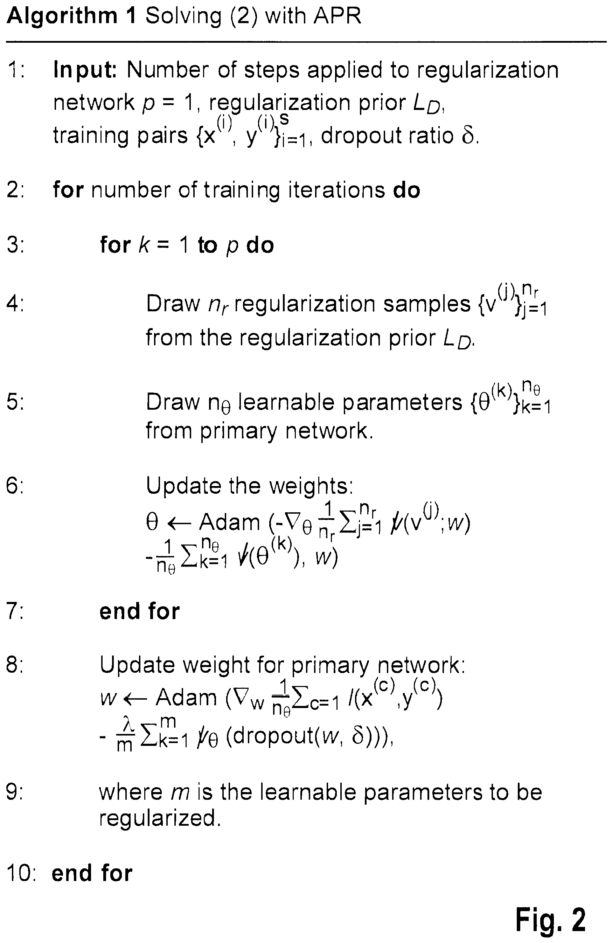

for a small $\rho \in (0, 1)$, to learn sparse and quantized networks. The optimization algorithm we use is the same as that of the classical GAN, i.e., alternating (stochastic) gradient descent and ascent, which is summarized in the algorithm depicted in FIG. 2. At convergence, a simple oneshot rounding is applied coordinate-wise to $\theta$.

Two dominant approaches exist in literature to compare and contrast the present approach to previous ones for network quantization and sparsification. These approaches are divided on whether quantization and sparsification intervene in the training process. Many existing methods operate on trained networks without exercising any proactive control on the potential loss of prediction accuracy due to quantization and sparsification. In contrast, other recent methods perform simultaneous training and quantization (and/or sparsification). The present method lies in the second approach.

Direct training subject to the quantization and sparsification constraint entails hard discrete optimization. Existing methods differ on how to softly implement the constraint. One possibility is to heuristically intertwine the gradient descent and quantization (possibly also sparsification) step.

The immediate quantization steps tend to save substantially forward- and backward-propagation cost. However, these methods are not principled from the optimization viewpoint. Another possibility is to embed the entire learning problem into a Bayesian framework, such that quantization and sparsity can be promoted via imposing appropriate Bayesian priors on the network weights. Adopting the Bayesian framework has shown to be favorable for network compression, i.e., exhibiting an automatic regularization effect. Also, in theory, it is possible to impose arbitrary desirable structural priors on the weights. However, discrete distributions are not suitable for practical Bayesian inference via numerical optimization. Analytic tricks, such as reparametrization or continuous relaxations, are needed to find surrogates for discrete distributions so that effective computation can be performed.

Compared to the above possibilities, the quantization and sparsification is encoded via an adversarial network that is fed with samples from the desired discrete distribution directly. The discreteness prior is enforced in a principled manner. The (sometimes substantial) analytic effort of deriving benign surrogates for discrete distributions, as needed in the Bayesian framework, is saved by requiring only samples from the discrete target distributions which are often easy to obtain.

Following is a description of three tricks which may be used in implementation. These tricks are not necessary but may be beneficial. The first trick is clipping of $\omega$. Note that optimizing (5) and (6) is subject to the constraint that $\psi(\cdot; \omega)$ is 1-Lipschitz, where the constant 1 can be changed to any bounded K by adjusting $\lambda$ accordingly. So it is enough to make $\psi(\cdot; \omega)$ Lipschitz. Since $\psi(\cdot; \omega)$ is realized as a neural network, it is Lipschitz whenever $\omega$ is bounded. This can be approximated by projecting each $\omega_i$ into [-1, 1] after each update.

Another trick is weighted sampling of $\theta$. The coordinates of $\theta$ are assumed to be i.i.d.. However, when training deep networks, different layers may have vastly different numbers of nodes, leading to disparity in number of weights - this is especially true for the first and last layers, which usually have small numbers of weights compared to other layers. The disparity leads to difficulty of quantization for the first and last layers, as layers with significant numbers of weights tend to be sampled more frequently in a stochastic optimization setting and hence their weights tend to converge to the target distribution fast. In APR framework, the problem can be easily solved by reweighted sampling: let $N_i$ be the number of weights in the i-th layer. Probability of sampling weights in the i-th layer is scaled by the factor $1/N_i$.

The third trick is homotopy continuation on $\mathcal{L}_t$. For a discrete target distribution $\mathcal{L}_t$, ideally the discriminator $\psi(\cdot; \omega)$ will be discretely supported, which may cost a neural network substantial time to learn to approximate. A homotopy continuation technique may be used that moves the distribution gradually toward the target distribution $\mathcal{L}_t$, from a "nice" auxiliary distribution $\mathcal{L}_a$:

$$\mathcal{L}_\xi = \left(1 - \frac{\xi}{T}\right)\mathcal{L}_a + \frac{\xi}{T}\mathcal{L}_t. \qquad (7)$$

Here $\xi$ is the time factor, and T is the total training epochs. $\mathcal{L}_a$ can be conveniently chose as the continuous uniform distribution that covers the range of $\mathcal{L}_t$. This can be considered as a crude graduated smoothing process for discrete distributions, which are controlled via inputting mixture samples-a distinctive feature of our method. This can be contrasted to the delicate analytic smoothing or reparameterization techniques for discrete distributions. This homotopy continuation empirically improves the convergence speed but is not necessary for convergence.

The present disclosure is focused on solving problem of form (1), particularly in the context of learning quantized and sparse neural networks where $\mathcal{L}_t$ is a discrete distribution. Prior approaches either solve the resulting mixed continuous-discrete optimization problem by the projected gradient heuristic (i.e., gradient descent mixed with quantization and/or sparsification), or embed the problem into a Bayesian framework, deploying which necessarily entails resolving analytic and computational issues around the discrete distribution. In contrast, this disclosure proposes an adversarial probabilistic regularization (APR) framework for the problem, with the following characteristics:

(1) The regularizer, which is implemented based on a deep network, is (almost everywhere-a.e.) differentiable. So if $f$ ($\theta$) is a.e. differentiable, which is true particularly when it is also based on a deep network, the combined minimax objective in (5) is amenable to gradient based optimization methods. The Lipschitz constraint in (5) can be implemented as a convex constraint on $\omega$. So the resulting optimization problem tends to be nicer than that derived from the mixed continuous-discrete approach from an optimization viewpoint.

(2) The regularization needs only samples from $\mathcal{L}_t$ but not $\mathcal{L}_t$ itself. This allows considerable generality in selecting $\mathcal{L}_t$ so long as samples can be easily obtained; when $\mathcal{L}_t$ is a discrete distribution, sampling is particularly straightforward. This avoids the many analytic and computational hurdles around the Bayesian approach.

The simple method proposed herein compares favorably to state-of-the-art methods for network quantization and sparsification. For the method proposed herein, the coordinates of $\theta$ are assumed to be i.i.d., which might be restrictive for certain applications. The Bayesian framework is not subject to the restriction in theory, but analytic and computational tractability might be an issue, as we discussed above. When $\theta$ is sufficiently long, say for deep networks, it is possible to generalize the present framework to encode distributions priors on short segments of $\theta$.

For network quantization and sparsification, methods that perform immediate quantization and sparsification at each optimization iteration tend to save substantial amounts of forward- and backward-propagation computation. The present method can be easily modified to perform the immediate operations, although as remarked above, this is less principled from the optimization viewpoint.

Several methods (), including the present method, have reported performances of quantized networks to be comparable to those of real-valued networks. In theory, the capacity of quantized networks is still not well understood. For example, whether there will be a universal approximation theorem for quantized networks is not clear yet.

Experiments were conducted for tasks of sparse recovery and image classification to study the behavior and verify the effectiveness of APR. The image classification was evaluated on two datasets, namely MNIST and CIFAR-10. Comparison methods used include generative momentum matching (GMM), binary connect, trained ternary quantization (TTQ), variational network quantization (VNQ), and training.

The GMM is mostly related to the GANs-based approach. To the best of our knowledge, GMM has not been developed or employed for regularization purpose. Nevertheless, we exploit the GMM for probabilistic regularization purpose and compare with APR. More specifically, given a set of samples $v = \{v_i\}$ from regularization distribution $p_r$ and a set of weights $\{\theta_j\}$, the distribution distance between the two sets of samples is measured by maximum mean discrepancy (MMD)

$$\phi(\theta) = \left\| \frac{1}{|v|} \sum_i \kappa(v_i) - \frac{1}{|\theta|} \sum_j \kappa(\theta_j) \right\|_2^2 , \qquad (8)$$

where $\kappa$ is a Gaussian kernel with a bandwidth $\sigma$ in order to match high order moments. To train a deep network with weights constrained to arbitrary prior $p_r$ using GMM, we minimize the empirical loss function (2) where the regularizer $\phi$ is defined by (8). To achieve better performance, the heuristics employed in (8) is followed: a square root of the MMD is used as the regularizer and a mixture of Gaussian $\kappa = \sum_\sigma \kappa_\phi$ is adopted as the kernel function.

The present approach is compared with binary connect on a VGG-like deep network for the case of network binarization. The present approach was compared with TTQ as a baseline for network ternarization on the residual networks with 20, 32, 44 and 56 layers which have 0.27M, 0.46M, 0.66M and 0.85M learnable parameters, respectively. The approach was also compared with a recently proposed continuous relaxation-based approach, namely variational network quantization (VNQ) for network ternarization. In conformity of experimental settings, the approach was compares with VNQ on DenseNet-121.

Adam was used to train the quantized network and adopt default hyper-parameter settings to train the primary network. Adam hyper-parameter for the regularization network is set to be $\beta_1 = 0.5$, $\beta_2 = 0.9$. The baseline models are also trained with Adam for a fair comparison. The sample batch size for the critic is 256. The weight learning rates are scaled by the weight initialization coefficient. Throughout the experiment, we enforce the weights to have binary or ternary values. For the ternary network, we evaluate the priors with various sparsity levels. We follow a conventional image preprocessing and augmentation for the corresponding datasets. We construct the regularization network based on a multilayer perceptron (MLP) with three hidden layers and ReLU as the activation function.

First, network binarization and ternarization was conducted for digits classification on MNIST dataset. In this experiment, a modified LeNet-5 was adopted which contains four weight layers with 1.26M learnable parameters. The quantized networks are trained from a pretrained full-precision model with baseline error 0.76%. Learning rate starts at 0.001 and linearly decays to zero after 200 epochs. The performance of APR and GMM-regularized network were compared in this experiment. The learning schedule was the same for both approaches. Bandwidth parameter for the Gaussian mixture kernel $\kappa$ was set to be {0.001, 0.005, 0.01, 0.05, 0.1}. The regularization parameter for GMM was set to $\lambda$ = $10^{-3}$ and $\lambda$ = $10^{-4}$ for APR.

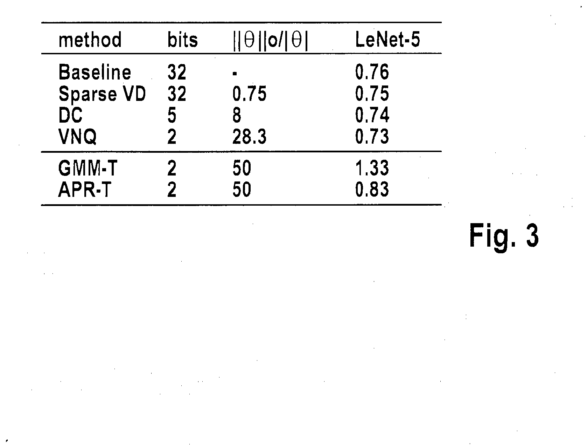

Following is a comparison of APR and GMM-regularized networks. Referring to table depicted in FIG. 3, APR (shown as APR-T in the table, T for ternary weights) achieves a competitive performance of 0.83% error, which outperforms GMM (shown as GMM-T) by 0.6%. Both approaches enforce weight distribution with sharply ternary patterns. However, regularizing deep networks with GMM encounters scalability issues even with small networks such as LeNet-5. In order to estimate the kernels in (8), the computational cost of the GMM regularizer grows quadratically w.r.t. the number of weights. In the case of LeNet-5, only 1% of the weights are randomly selected and regularized at each step, which still requires $10^7$ kernels to be computed at each step. On the contrary, the computation cost of APR grows linearly w.r.t. the number of weights given a fixed size regularization network.

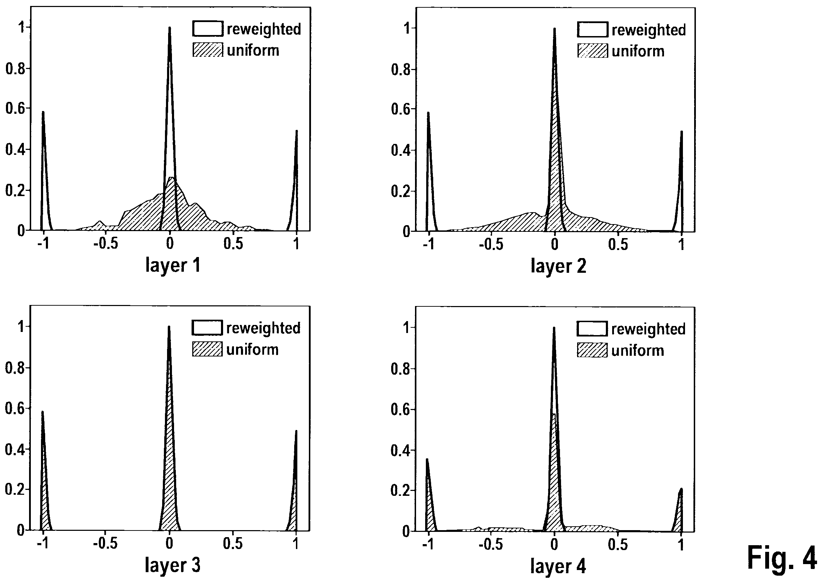

First and last layers of deep networks poses more difficulties for quantization, due to the unbalanced size of different layers. The problem with LeNet-5 quantization is especially severe: the four layers of the networks contains 500, 0.25M, 1.2M and 5K number of weights, leading the empirical distribution $p(\omega)$ to be dominated by the third layer. As proposed above, this problem can be easily solved by employing weighted sampling trick. The histograms of weights for each layer of LeNet-5 is illustrated in FIG. 4. Uniform weights and weights which have been reweighted employing the weighted sampling trick described above area shown for each layer. For both cases, weights of the third layer converge to a ternary pattern where both histograms overlap each other. However, weights of the first layer failed to fit the regularization prior without adopting weighted sampling. On the contrary, weights from all four layers exhibits strong ternary pattern with an employment of weighted sampling.

The classification performance of APR-regularized network was evaluated on the dataset of CIFAR-10 which consists of 50,000 training and 10,000 testing RGB images of size 32×32. A standard data preparation strategy was used on CIFAR-10: both the training and testing images are preprocessed by per-pixel mean subtraction. The training set is augmented by padding 4 pixels on each side of the image and randomly crop a 32 × 32 region. The minibatch size for training the primary network is 128. The approach was evaluated on VGG-9 and ResNet-20, 32, 44.

In this experiment, the weights were enforced to have either binary or ternary values. For fair comparison, the same quantization protocol was followed, i.e., the first convolution layer and the fully connected layer are not quantized since they only contain less than 0.4% of total amount of weights. The deep neural networks are trained with a total number of 400 epochs with an initial learning rate of 0.01. The learning rate is decayed by a factor of 10 at the end of epoch 80, 120 and 150. No weight decay is used since APR is already a strong regularization on the weights. To facilitate the convergence of the network, homotopy continuation was employed by adopting an auxiliary uniform distribution $p_s \sim U[-1,1]$. Since APR along does not enforce the discrete value, rounding noise is added to the weights after 350 epochs.

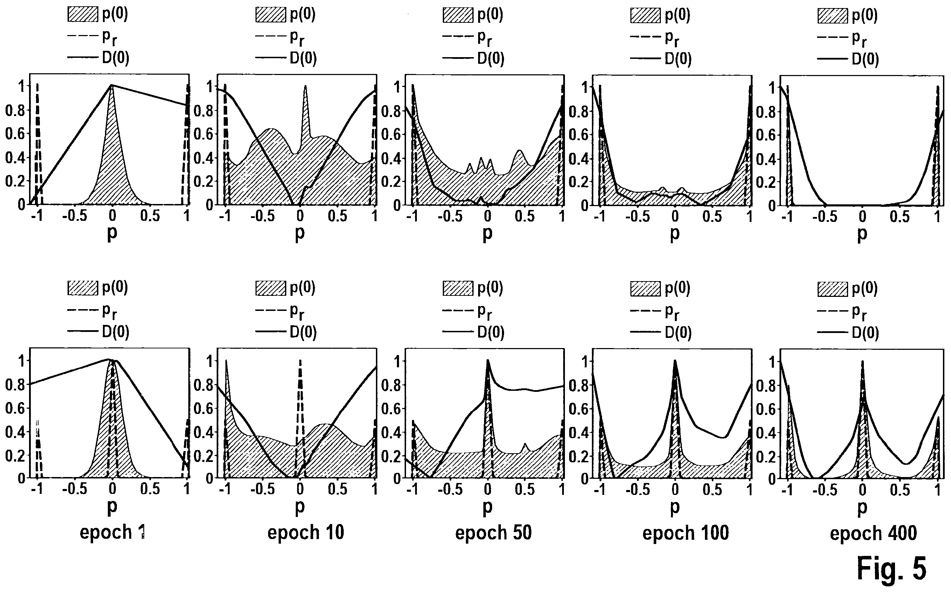

The evolution of weight distribution at the end of epochs 1, 10, 50, 100 and 400 for training ResNet-44 on CIFAR-10 is shown in FIG. 5. The upper row shows binary weights, and the lower row shows ternarized weights. The solid line corresponds to empirical distribution of weights according to regularization function $\psi(\theta)$, scaled to [0, 1] for display purposes. The dotted line shows regularization distribution $p_r$. The discrete distribution was smoothed for display purpose. The shaded area shows the empirical distribution $p(\theta)$ of weights. Blue solid line: evaluation of regularization function $\psi(\theta)$, scaled to [0, 1] for display purpose. As can be seen, empirical distribution of weights according to regularization function $\psi(\theta)$ (solid line) approaches the discrete prior $p_r$.

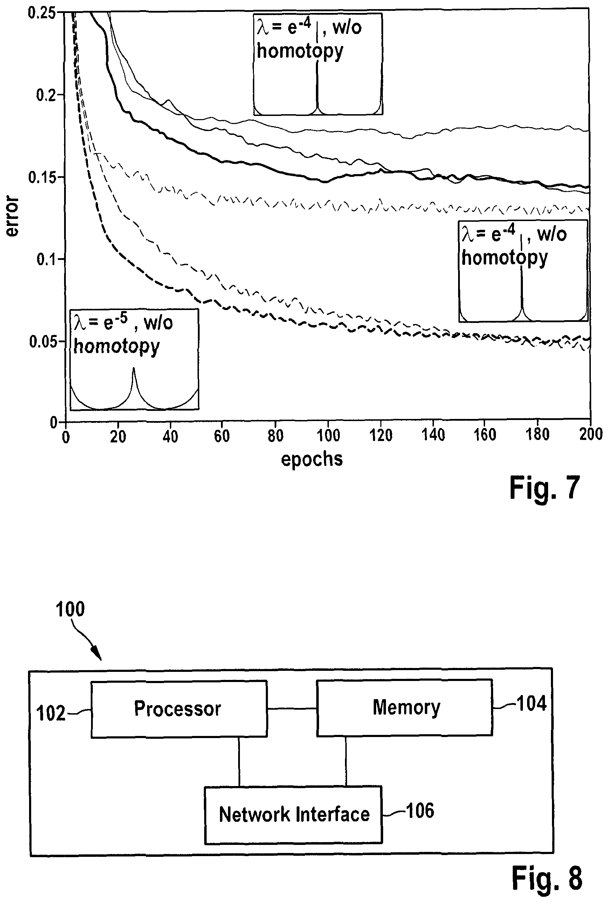

The learning curve for training ResNet-20 with ternary weights is shown in FIG. 7 where the first 200 epochs are demonstrated. Given a strong regularization ($\lambda$ = $10^{-5}$), training the primary network is stagnated without homotopy continuation (black lines). On the contrary, the network resumes to converge while reaching weights with ternarized patterns at the same time when homotopy continuation is employed (red lines). By choosing a small value of $\lambda$ = $10^{-5}$, the loss $f$ also drops quickly by implicitly relaxing the discrete prior $p_r$ with the regularization networks.

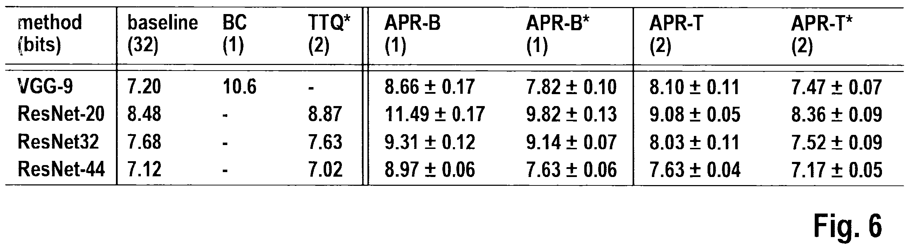

FIG. 6 shows a table of the classification error of binary and ternary networks. The present approach is compared with a full precision baseline model, binary connect (BC) and trained ternary quantization (TTQ). Although the present approach is able to train a discrete network from scratch, the network was trained using a pretrained full-precision model to have fair comparisons. APR-B refers to APR regularized with binary weights, and APR-T refers to APR regularized with ternary weights. Models that finetune from a pretrained full-precision network are marked with '*' in the table. The present approach achieves state-of-the-art performance on VGG-9, ResNet-20 and ResNet-32 for network ternarization. Deep networks ternarized with APR introduces minor performance drop compared to the full-precision counterpart on ResNet-44 and exceeds the full precision network on VGG-9, ResNet-20 and ResNet-32. On VGG-9, APR-B achieves an error of 7.82% and outperforms BC by 2.5%. The ternarized network APR-T further reduces the error to 7.47%.

FIG. 8 depicts an embodiment of a computer system 100 which may be used to implement the framework described herein. In particular, the computer system includes at least one processor 102, such as a central processing unit (CPU), an application specific integrated circuit (ASIC), a field programmable gate array (FPGA) device, or a micro-controller. The processor 102 is configured to execute programmed instructions that are stored in the memory 104. The memory 104 can be any suitable type of memory, including solid state memory, magnetic memory, or optical memory, just to name a few, and can be implemented in a single device or distributed across multiple devices. The programmed instructions stored in memory 104 include instructions for implementing various functionality in the system, including identifying candidates and candidate nodes for terminologies and using collective inference based on occurrence and co-occurrence statistics to score the candidates. The computing system may include one or more network interface device(s) 106 for transmitting and receiving data and communicating via a network.

While the disclosure has been illustrated and described in detail in the drawings and foregoing description, the same should be considered as illustrative and not restrictive in character. It is understood that only the preferred embodiments have been presented and that all changes, modifications and further applications that come within the scope of protection, as defined by the claims, are desired to be protected.

**Claims**

1. A computer-implemented method of training a supervised neural network to solve an optimization problem for image classification, the optimization problem involving minimizing a training error function $f(\theta)$ based on training inputs and outputs for the supervised neural network, where $\theta$ is a vector of independent and identically distributed samples of a target distribution $\mathcal{L}_t$ representing weights of the supervised neural network, and wherein each pair of training inputs and outputs represents a respective image and a label identifying an object in the associated image, the method comprising:

   generating an adversarial probabilistic regularizer, APR, $\phi_{\mathcal{L}_t}(\theta)$ using a discriminator of a generative adversarial network, the discriminator receiving samples from $\theta$ and samples from a regularizer distribution $p_r$ as inputs; and iteratively training the supervised neural network based on every pair of training inputs and outputs, wherein the APR $\phi_{\mathcal{L}_t}(\theta)$ is added to the training error function $f(\theta)$ for each training iteration of the supervised neural network;

   wherein the target distribution $\mathcal{L}_t$ is a discrete distribution;

   wherein the APR $\phi_{\mathcal{L}_t}(\theta)$ is given by

   $$\phi_{\mathcal{L}_t}(\theta) = \max_{\|\psi\|_L \leq 1} \mathbb{E}_{\theta \sim \mathcal{L}_t}[\psi(\theta)] - \frac{1}{d}\sum_{i=1}^{d}\psi(\theta_i),$$

   wherein $\psi$ represents the supervised neural network, and wherein the optimization problem is given by

   $$\min_{\theta} \max_{\omega \|\psi(\cdot;\omega)\|_L \leq 1} f(\theta) + \lambda\left[\mathbb{E}_{\theta \sim \mathcal{L}_t}[\psi(\theta;\omega)] - \frac{1}{d}\sum_{i=1}^{d}\psi(\theta_i;\omega)\right]$$

   after the APR $\phi_{\mathcal{L}_t}(\theta)$ is added to the training error function $f(\theta)$, and wherein $\lambda$ is a scaling coefficient.

2. The method of claim 1, wherein the training error function is given by

   $$f(\theta) = \mathbb{E}_{(x,y) \sim \mathcal{L}_D}[\ell((x,y);\theta)]$$

   wherein the training image-label pairs $(x,y) \sim \mathcal{L}_D$, $\mathcal{L}_D$ being a predetermined distribution, and wherein $\ell()$ is a loss function, and wherein the optimization problem is given by

$$\min_{\theta} \max_{\omega \|\psi(\cdot;\omega)\|_L \leq 1} \mathbb{E}_{(x,y)\sim \mathcal{L}_D}[\ell((x,y);\theta)] + \lambda \left[ \mathbb{E}_{\theta \sim \mathcal{L}_t}[\psi(\theta;\omega)] - \frac{1}{d}\sum_{i=1}^{d} \psi(\theta_i;\omega) \right]$$

after the APR $\phi_{\mathcal{L}_t}(\theta)$ is added to the training error function $f(\theta)$.

3. The method of claim 1, wherein the discrete distribution is a binary distribution.

4. The method of claim 3, wherein the target distribution is set to

$$p(\theta = 1) = p(\theta = -1) = ½.$$

5. The method of claim 1, wherein the discrete distribution is a ternary distribution.

6. The method of claim 5, wherein the target distribution is set to

$$p(\theta = 1) = p(\theta = -1) = \frac{\rho}{2}, p(\theta = 0) = 1 - \rho.$$

7. A neural network training system comprising:

   a non-transitory computer readable storage medium storing programmed instructions; and
   a processor configured to execute the programmed instructions,
   wherein the programmed instructions include instructions which, when executed by the processor, cause the processor to perform a method according to any of claims 1 to 6.

**Patentansprüche**

1. Computerimplementiertes Verfahren zum Trainieren eines überwachten neuronalen Netzwerks, um ein Optimierungsproblem zur Bildklassifizierung zu lösen, wobei das Optimierungsproblem Minimieren einer Trainingsfehlerfunktion f($\theta$) basierend auf Trainingseingaben und -ausgaben für das überwachte neuronale Netzwerk umfasst, wobei $\theta$ ein Vektor unabhängiger und identisch verteilter Proben einer Zielverteilung Lt ist, die Gewichte des überwachten neuronalen Netzwerks darstellen, und wobei jedes Paar von Trainingseingaben und -ausgaben ein jeweiliges Bild und eine Bezeichnung darstellt, die ein Objekt in dem assoziierten Bild identifiziert, wobei das Verfahren Folgendes umfasst:

   Erzeugen eines gegnerischen probabilistischen Regularisierers, APR, $\phi_{Lt}(\theta)$ unter Verwendung eines Diskriminators eines generativen gegnerischen Netzwerks, wobei der Diskriminator Proben von $\theta$ und Proben von einer Regularisiererverteilung $p_r$ als Eingaben empfängt; und
   iteratives Trainieren des überwachten neuronalen Netzwerks basierend auf jedem Paar von Trainingseingaben und -ausgaben, wobei der APR $\phi_{Lt}(\theta)$ für jede Trainingsiteration des überwachten neuronalen Netzwerks zur Trainingsfehlerfunktion f($\theta$) addiert wird;
   wobei die Zielverteilung L$_t$ eine diskrete Verteilung ist;
   wobei der APR $\phi_{Lt}(\theta)$ gegeben ist durch

$$\phi_{\mathcal{L}_t}(\theta) = \max_{\|\psi\|_L \leq 1} \mathbb{E}_{\theta \sim \mathcal{L}_t}[\psi(\theta)] - \frac{1}{d}\sum_{i=1}^{d} \psi(\theta_i),$$

   wobei $\psi$ das überwachte neuronale Netzwerk darstellt, und
   wobei das Optimierungsproblem gegeben ist durch

$$\min_{\theta} \max_{\omega \|\psi(\cdot;\omega)\|_L \leq 1} f(\theta) + \lambda \left[ \mathbb{E}_{\theta \sim \mathcal{L}_t}[\psi(\theta;\omega)] - \frac{1}{d}\sum_{i=1}^{d} \psi(\theta_i;\omega) \right]$$

nachdem der APR $\phi_{Lt}(\theta)$ zur Trainingsfehlerfunktion f($\theta$) addiert wurde, und wobei $\lambda$ ein Skalierungs-koeffizient ist.

2. Verfahren nach Anspruch 1, wobei die Trainingsfehlerfunktion gegeben ist durch

$$f(\theta) = \mathbb{E}_{(x,y)\sim\mathcal{L}_D}[\ell((x,y);\theta)]$$

wobei die Trainingsbild-Bezeichnung-Paare (x, y) $\sim$ L$_D$ sind, wobei L$_D$ eine vorbestimmte Verteilung ist und wobei I() eine Verlustfunktion ist, und
wobei das Optimierungsproblem gegeben ist durch

$$\min_{\theta}\max_{\omega\|\psi(\cdot;\omega)\|_L\leq 1}\mathbb{E}_{(x,y)\sim\mathcal{L}_D}[\ell((x,y);\theta)] + \lambda\left[\mathbb{E}_{\theta\sim\mathcal{L}_t}[\psi(\theta;\omega)] - \frac{1}{d}\sum_{i=1}^{d}\psi(\theta_i;\omega)\right]$$

nachdem der APR $\phi_{Lt}(\theta)$ zur Trainingsfehlerfunktion f($\theta$) addiert wurde.

3. Verfahren nach Anspruch 1, wobei die diskrete Verteilung eine binäre Verteilung ist.

4. Verfahren nach Anspruch 3, wobei die Zielverteilung auf Folgendes festgelegt wird:

$$p(\theta = 1) = p(\theta = -1) = \tfrac{1}{2}.$$

5. Verfahren nach Anspruch 1, wobei die diskrete Verteilung eine ternäre Verteilung ist.

6. Verfahren nach Anspruch 5, wobei die Zielverteilung auf Folgendes festgelegt wird:

$$p(\theta = 1) = p(\theta = -1) = \frac{\rho}{2}, p(\theta = 0) = 1 - \rho.$$

7. System zum Trainieren eines neuronalen Netzwerks, umfassend:

ein nichtflüchtiges computerlesbares Speichermedium, das programmierte Anweisungen speichert; und
einen Prozessor, der dazu ausgelegt ist, die programmierten Anweisungen auszuführen,
wobei die programmierten Anweisungen Anweisungen umfassen, die bei Ausführung durch einen Prozessor den Prozessor veranlassen, ein Verfahren nach einem der Ansprüche 1 bis 6 durchzuführen.

**Revendications**

1. Procédé mis en œuvre par ordinateur de formation d'un réseau neuronal supervisé afin de résoudre un problème d'optimisation pour la classification d'images, le problème d'optimisation comprenant la minimisation d'une fonction d'erreur d'apprentissage f($\theta$) basée sur des entrées et sorties d'apprentissage pour le réseau neuronal supervisé, où $\theta$ est un vecteur d'échantillons indépendants et distribués identiquement d'une distribution cible Lt représentant des poids du réseau neuronal supervisé, et où chaque paire d'entrées et sorties d'apprentissage représente une image respective et une étiquette identifiant un objet dans l'image associée, le procédé comprenant les étapes suivantes :

générer un régulariseur probabiliste antagoniste, APR, $\varphi_{Lt}(\theta)$ en utilisant un discriminateur d'un réseau antagoniste génératif, le discriminateur recevant des échantillons de $\theta$ et des échantillons d'une distribution de régulariseur p$_r$ comme entrées ; et
entraîner de manière itérative le réseau neuronal supervisé sur la base de chaque paire d'entrées et sorties d'apprentissage, où l'APR $\phi_{Lt}(\theta)$ est ajouté à la fonction d'erreur d'apprentissage f($\theta$) pour chaque itération d'apprentissage du réseau neuronal supervisé ;
où la distribution cible Lt est une distribution discrète ;
où l'APR $\varphi_{Lt}(\theta)$ est donné par

$$\phi_{\mathcal{L}_\tau}(\theta) = \max_{\|\psi\|_L \leq 1} \mathbb{E}_{\theta \sim \mathcal{L}_t}[\psi(\theta)] - \frac{1}{d}\sum_{i=1}^d \psi(\theta_i),$$

où $\psi$ représente le réseau neuronal supervisé, et
où le problème d'optimisation est donné par

$$\min_\theta \max_{\omega \|\psi(\cdot;\omega)\|_L \leq 1} f(\theta) + \lambda\left[\mathbb{E}_{\theta \sim \mathcal{L}_t}[\psi(\theta;\omega)] - \frac{1}{d}\sum_{i=1}^d \psi(\theta_i;\omega)\right]$$

Après que l'APR $\phi_{Lt}(\theta)$ a été ajouté à la fonction d'erreur d'apprentissage f($\theta$), et où $\lambda$ est un coefficient de mise à l'échelle.

2. Procédé selon la revendication 1, dans lequel la fonction d'erreur d'apprentissage est donnée par

$$f(\theta) = \mathbb{E}_{(x,y) \sim \mathcal{L}_D}[\ell((x,y);\theta)]$$

où les paires image-étiquette d'apprentissage (x, y) ~ $L_D$, $L_D$ étant une distribution prédéterminée, et où l() est une fonction de perte, et
où le problème d'optimisation est donné par

$$\min_\theta \max_{\omega \|\psi(\cdot;\omega)\|_L \leq 1} \mathbb{E}_{(x,y) \sim \mathcal{L}_D}[\ell((x,y);\theta)] + \lambda\left[\mathbb{E}_{\theta \sim \mathcal{L}_t}[\psi(\theta;\omega)] - \frac{1}{d}\sum_{i=1}^d \psi(\theta_i;\omega)\right]$$

après que l'APR $\phi_{Lt}(\theta)$ a été ajouté à la fonction d'erreur d'apprentissage f($\theta$).

3. Procédé selon la revendication 1, dans lequel la distribution discrète est une distribution binaire.

4. Procédé selon la revendication 3, dans lequel la distribution cible est fixée à

$$p(\theta = 1) = p(\theta = -1) = ½.$$

5. Procédé selon la revendication 1, dans lequel la distribution discrète est une distribution ternaire.

6. Procédé selon la revendication 5, dans lequel la distribution cible est fixée à

$$p(\theta = 1) = p(\theta = -1) = \frac{\rho}{2}, p(\theta = 0) = 1 - \rho.$$

7. Système d'apprentissage de réseau neuronal comprenant :

un support de stockage lisible par ordinateur non transitoire stockant des instructions programmées ; et
un processeur configuré pour exécuter les instructions programmées,
où les instructions programmées comprennent des instructions qui, lorsqu'elles sont exécutées par le processeur, amènent le processeur à exécuter un procédé selon l'une quelconque des revendications 1 à 6.

10

12 — f($\theta$)

$\theta$

v ~ p$_r$

v

$\varphi(\theta; w)$

—-14

⊗

+     +

L($\theta$, w)  —16

# Fig. 1

**Algorithm 1** Solving (2) with APR

---

1:  **Input:** Number of steps applied to regularization network $p = 1$, regularization prior $L_D$, training pairs $\{x^{(i)}, y^{(i)}\}_{i=1}^{s}$, dropout ratio $\delta$.

2:  **for** number of training iterations **do**

3:      **for** $k = 1$ **to** $p$ **do**

4:          Draw $n_r$ regularization samples $\{v^{(j)}\}_{j=1}^{n_r}$ from the regularization prior $L_D$.

5:          Draw $n_\theta$ learnable parameters $\{\theta^{(k)}\}_{k=1}^{n_\theta}$ from primary network.

6:          Update the weights:
$$\theta \leftarrow \text{Adam}\ (-\nabla_\theta \frac{1}{n_r}\Sigma_{j=1}^{n_r}\ \mathcal{V}(v^{(j)};w)$$
$$-\frac{1}{n_\theta}\Sigma_{k=1}^{n_\theta}\ \mathcal{V}(\theta^{(k)}),\ w)$$

7:      **end for**

8:      Update weight for primary network:
$$w \leftarrow \text{Adam}\ (\nabla_w \frac{1}{n_\theta}\Sigma_{c=1}\ l(x^{(c)},y^{(c)})$$
$$-\frac{\lambda}{m}\Sigma_{k=1}^{m}\ \mathcal{V}_\theta\ (\text{dropout}(w,\ \delta))),$$

9:      where $m$ is the learnable parameters to be regularized.

10:  **end for**

<div align="right">

**Fig. 2**

</div>

| method | bits | $\|\theta\|_0/\|\theta\|$ | LeNet-5 |
|---|---|---|---|
| Baseline | 32 | - | 0.76 |
| Sparse VD | 32 | 0.75 | 0.75 |
| DC | 5 | 8 | 0.74 |
| VNQ | 2 | 28.3 | 0.73 |
| GMM-T | 2 | 50 | 1.33 |
| APR-T | 2 | 50 | 0.83 |

Fig. 3

Fig. 4

epoch 1          epoch 10          epoch 50          epoch 100          epoch 400

Fig. 5

EP 3 756 140 B1

| method (bits) | baseline (32) | BC (1) | TTQ* (2) | APR-B (1) | APR-B* (1) | APR-T (2) | APR-T* (2) |
|---|---|---|---|---|---|---|---|
| VGG-9 | 7.20 | 10.6 | - | 8.66 ± 0.17 | 7.82 ± 0.10 | 8.10 ± 0.11 | 7.47 ± 0.07 |
| ResNet-20 | 8.48 | - | 8.87 | 11.49 ± 0.17 | 9.82 ± 0.13 | 9.08 ± 0.05 | 8.36 ± 0.09 |
| ResNet32 | 7.68 | - | 7.63 | 9.31 ± 0.12 | 9.14 ± 0.07 | 8.03 ± 0.11 | 7.52 ± 0.09 |
| ResNet-44 | 7.12 | - | 7.02 | 8.97 ± 0.06 | 7.63 ± 0.06 | 7.63 ± 0.04 | 7.17 ± 0.05 |

Fig. 6

EP 3 756 140 B1

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **2017** ; **ZHAO et al.** *Adversarially regularized auto-encoders*, 15 November 2017

- **2018** ; **FATHONY et al.** *Discrete Wasserstein generative advarsarial networks (DWGAN)*, 13 February 2018, https://openreview.net/references/pdf?id=SJeL6ixwM